# EUROPEAN PATENT SPECIFICATION

(11) **EP 4 006 101 B1**
(45) Date of publication and mention of the grant of the patent: **11.03.2026**
(21) Application number: 20846637.5
(22) Date of filing: 19.05.2020
(51) Int. Cl.: B29C 33/72, B29C 45/17, C08L 23/08, B29C 48/27, C08K 3/26, C08L 29/04

(54) **PURGING AGENT AND METHOD FOR PURGING MOLDING MACHINE USING SAME**
SPÜLMITTEL UND VERFAHREN ZUM SPÜLEN EINER FORMMASCHINE UNTER VERWENDUNG DAVON
AGENT DE PURGE ET PROCÉDÉ DE PURGE D'UNE MACHINE À MOULER L'UTILISANT

(30) Priority: 31.07.2019 JP 2019140876
(43) Date of publication of application: 01.06.2022
(73) Proprietor: Kuraray Co., Ltd., Kurashiki-shi, Okayama 710-0801 (JP)
(72) Inventor: ITO, Yu, Kurashiki-shi, Okayama 713-8550 (JP); OKAMOTO, Makoto, Pasadena, Texas 77507 (US); SUZUKI, Makoto, Kurashiki-shi, Okayama 713-8550 (JP)
(74) Representative: Müller-Boré & Partner Patentanwälte PartG mbB
(86) International application number: PCT/JP2020/019834
(87) International publication number: WO 2021/019873

(56) References cited:
- EP-A2- 0 813 948
- JP-A- 2001 335 671
- JP-A- 2002 292 717
- JP-A- 2003 001 637
- JP-A- 2016 222 933
- JP-A- 2019 001 121
- JP-A- H1 016 023
- JP-A- H1 067 040
- US-A1- 2011 094 540

## Description

### Technical Field

The present invention relates to a purging agent and a method for purging a molding machine using the same, and more particularly, to a purging agent with improved handleability and improved safety and a method for purging a molding machine using the same.

### Background Art

Resins with high gas barrier properties, including ethylene-vinyl alcohol copolymers (also referred to as "EVOHs" hereinafter), are widely used in products such as films and containers for food packaging. When a resin to be processed is melt-extruded in a molding machine in order to obtain such a product, adhesion of the resin may occur in flow passages of the molding machine (for example, the resin may adhere to a screw). If this adhering resin is left as it is for a long period of time, the resin undergoes deterioration such as scorching, gelation, and decomposition. This causes resulting products to have defects such as streaks, lumps, and gels, or requires an enormous amount of time and incurs a material loss in order to eliminate such defects.

Various purging agents have been proposed heretofore. For example, Patent Document 1 discloses a purging agent containing a hydrophobic thermoplastic resin such as a polyolefin resin, a hydrophilic thermoplastic resin such as an ethylene-vinyl acetate copolymer saponified product, and water. Patent Document 2 discloses a purging agent obtained by blending an ethylene-vinyl ester copolymer saponified product or the like with water at a predetermined ratio. Patent Document 3 discloses a purging agent containing a polyolefin resin such as a low-density polyethylene (LDPE), a strongly basic compound such as a hydroxide of an alkali metal or an alkaline-earth metal, and a salt for generating free water. Patent Document 4 discloses a starch purging agent comprising water and a basic compound. Patent Documents 5 and 6 disclose purging agents containing ethylene-vinyl alcohol copolymers.

### Related Art Documents

### Patent Documents

Patent Document 1: JP H10-16023A
Patent Document 2: JP2008-279623A
Patent Document 3: JP2012-533647A
Patent Document 4: US 2011/094540 A1
Patent Document 5: EP 0 813 948 A2
Patent Document 6: JP H10 67040 A

### Summary of the Invention

### Problem to be Solved by the Invention

However, the purging agents disclosed in Patent Documents 1 and 2 are not considered capable of sufficiently removing a resin adhering to a screw and the like of a molding machine (such a resin is also referred to as a "resin to be purged" hereinafter). Accordingly, there still is a demand for improved purging ability. On the other hand, the purging agent disclosed in Patent Document 3 exhibits improved purging ability owing to the strongly basic compound as one of its components. However, the purging ability is still not satisfactory.

The present invention aims to solve the above-described problems, and it is an object of the present invention to provide a purging agent that enables efficient discharge of a resin to be purged present in a molding machine and a method for purging a molding machine using the purging agent.

### Means for Solving the Problem

The present invention is defined by a resin composition according to claim 1, and by a method for purging a molding machine according to claim 8. Preferred embodiments are claimed in the dependent claims.

### Effects of the Invention

According to the present invention, a resin to be purged present in a molding machine can be efficiently discharged from the molding machine. This can reduce defects in products obtained using the molding machine and also can reduce the time required and a material loss for eliminating these defects.

### Description of Embodiments

### (Resin Composition)

The resin composition of the present invention is a resin composition that can be used as a purging agent for, for example, the below-described purging of a molding machine in which a resin to be purged is present.

The resin composition of the present invention contains a hydrophilic resin (A), water (B), and a basic compound (C).

### (Hydrophilic Resin (A))

The hydrophilic resin (A) encompasses resins having an affinity for water, and examples of the hydrophilic resin (A) include resins having a water contact angle of 0° to 90°. The hydrophilic resin (A) is selected from the group consisting of EVOHs, polyvinyl alcohols, polyamides, polyacrylates, polyethylene glycols, and polyacrylamides. In particular, EVOHs are more preferable from the viewpoint of thermal stability and extrusion stability. By using the hydrophilic resin (A), an alkali aqueous solution containing the water (B) and the basic compound (C) can be stably retained in the hydrophilic resin (A) when the purging agent composed of the resin composition of the present invention is stored at room temperature, whereby the safety of the user can be ensured. Further, when purging is performed, the alkali aqueous solution is released as a result of melting of the hydrophilic resin (A), whereby an adhering resin to be purged on a screw can be effectively decomposed and removed.

### (EVOH)

An EVOH is, for example, a copolymer obtained through saponification of an ethylene-vinyl ester copolymer. Preparation and saponification of the ethylene-vinyl ester copolymer can be achieved by known methods. Examples of the vinyl ester used in these methods include fatty acid vinyl esters such as vinyl acetate, vinyl formate, vinyl propionate, vinyl pivalate, and vinyl versatate.

In the present invention, the ethylene unit content of the EVOH is, for example, preferably 15 mol% or more, more preferably 22 mol% or more, and still more preferably 24 mol% or more. Also, the ethylene unit content of the EVOH is, for example, preferably 60 mol% or less, more preferably 55 mol% or less, and still more preferably 50 mol% or less. When the ethylene unit content is less than 15 mol%, it may be difficult to extrude the resulting resin composition in the case where the melting region of a molding machine is set at a temperature of 105°C to 230°C. When the ethylene unit content is 60 mol% or less, the viscosity of the molten resin tends to be low, thereby making the removal of a resin to be purged difficult. The ethylene unit content of the EVOH can be measured by, for example, a nuclear magnetic resonance (NMR) method.

In the present invention, the degree of saponification of the EVOH (i.e., the degree of saponification of the vinyl ester component of the EVOH) is, for example, preferably 99 mol% or more, more preferably 98% or more, and still more preferably 95 mol% or more. When the degree of saponification is 99 mol% or more, the basic compound (C) can be prevented from being consumed during the saponification reaction, for example. Also, the degree of saponification of the EVOH is, for example, preferably 100% or less and may be 99.99% or less. The degree of saponification of the EVOH can be calculated from the peak area of hydrogen atoms contained in the vinyl ester structure and the peak area of hydrogen atoms contained in the vinyl alcohol structure measured by ¹H-NMR measurement.

The EVOH may have a unit(s) derived from a monomer(s) other than the ethylene and the vinyl ester and saponified product thereof to the extent that the object of the present invention is not compromised. When the EVOH has the other monomer unit(s), the upper limit of the content of the monomer unit(s) with respect to all the structural units of the EVOH is, for example, preferably 30 mol% or less, more preferably 20 mol% or less, still more preferably 10 mol% or less, and most preferably 5 mol% or less. When the EVOH has the unit(s) derived from the other monomer(s), the content thereof is, for example, preferably 0.05 mol% or more, and more preferably 0.1 mol% or more.

Examples of the other monomer include: alkenes such as propylene, butylene, pentene, and hexene; ester group-containing alkenes such as 3-acyloxy-1-propene, 3-acyloxy-1-butene, 4-acyloxy-1-butene, 3,4-diacyloxy-1-butene, 3-acyloxy-4-methyl-1-butene, 4-acyloxy-1-butene, 3,4-diacyloxy-1-butene, 3-acyloxy-4-methyl-1-butene, 4-acyloxy-2-methyl-1-butene, 4-acyloxy-3-methyl-1-butene, 3,4-diacyloxy-2-methyl-1-butene, 4-acyloxy-1-pentene, 5-acyloxy-1-pentene, 4,5-diacyloxy-1-pentene, 4-acyloxy-1-hexene, 5-acyloxy-1-hexene, 6-acyloxy-1-hexene, 5,6-diacyloxy-1-hexene, and 1,3-diacetoxy-2-methylenepropane, and saponified products thereof; unsaturated acids such as acrylic acids, methacrylic acids, crotonic acid, and itaconic acid, as well as anhydrides, salts, and mono- or di-alkyl esters thereof; nitriles such as acrylonitrile and methacrylonitrile; amides such as acrylamide and methacrylamide; olefin sulfonic acids such as vinyl sulfonic acid, allyl sulfonic acid, and methallyl sulfonic acid, as well as salts thereof; vinylsilane compounds such as vinyltrimethoxysilane, vinyltriethoxysilane, vinyl tri(β-methoxy-ethoxy)silane, and γ-methacryloxypropylmethoxysilane; alkyl vinyl ethers; vinyl ketones; N-vinylpyrrolidone; vinyl chloride; and vinylidene chloride.

The EVOH may be modified through urethanization, acetalization, cyanoethylation, oxyalkylation, or the like. The modified EVOH used as a purging agent exhibits improved compatibility with a resin to be purged, such as, for example, urethane resin, acetal resin, or acrylonitrile resin, and thus enables more efficient purging.

Two or more types of EVOHs that differ from each other in the ethylene unit content, the degree of saponification, the copolymer components, or the presence or absence of modification may be used in combination.

The EVOH can be obtained by a known method such as a bulk polymerization method, a solution polymerization method, a suspension polymerization method, or an emulsion polymerization method. The method used in one embodiment is a bulk polymerization method or solution polymerization method, which allows polymerization to proceed in the absence of solvent or in a solution such as an alcohol.

The solvent used in a solution polymerization method is not limited to particular solvents, and is, for example, an alcohol and preferably a lower alcohol such as methanol, ethanol, or propanol. The amount of the solvent to be used in a polymerization reaction solution may be selected in consideration of the viscosity-average degree of polymerization of an EVOH intended to be obtained and the chain transfer of the solvent, and the mass ratio of the solvent contained in the reaction solution to all the monomers (the solvent/all the monomers) is, for example, 0.01 to 10 and preferably 0.05 to 3.

Examples of a catalyst to be used in the above-described polymerization include: azo initiators such as 2,2-azobisisobutyronitrile, 2,2-azobis-(2,4-dimethylvaleronitrile), 2,2-azobis-(4-methoxy-2,4-dimethylvaleronitrile), and 2,2-azobis-(2-cyclopropylpropionitrile); and organic peroxide initiators such as isobutyryl peroxide, cumyl peroxyneodecanoate, diisopropyl peroxycarbonate, di-n-propyl peroxydicarbonate, t-butyl peroxyneodecanoate, lauroyl peroxide, benzoyl peroxide, and t-butyl hydroperoxide.

The polymerization temperature is preferably 20°C to 90°C and more preferably 40°C to 70°C. The polymerization time is preferably 2 to 15 hours and more preferably 3 to 11 hours. The rate of polymerization is preferably 10% to 90% and more preferably 30% to 80% with respect to the amount of the charged vinyl ester. The resin content in the solution after the polymerization is preferably 5% to 85% and more preferably 20% to 70%.

In the above-described polymerization, after allowing the polymerization to proceed for a predetermined time or after a predetermined rate of polymerization is achieved, a polymerization inhibitor is added, if necessary, and unreacted ethylene gas is distilled off and unreacted vinyl ester is removed to obtain the EVOH.

Subsequently, an alkali catalyst is added to the copolymer solution to saponify the copolymer. The saponification may be effected by, for example, either a continuous or batch saponification method. Examples of the alkali catalyst that can be added include sodium hydroxide, potassium hydroxide, and alkali metal alcoholates.

The EVOH after being subjected to the saponification reaction contains the alkali catalyst, by-product salts such as sodium acetate and potassium acetate, and other impurities. Thus, it is preferable to remove them by neutralization or washing, if necessary. When the EVOH after being subjected to the saponification reaction is washed with water (e.g., ion-exchange water) substantially free of predetermined ions (e.g., metal ions and chloride ions), some of the by-product salts such as sodium acetate and potassium acetate may be allowed to remain instead of being completely removed.

The EVOH may contain a thermoplastic resin other than the EVOH, a metal salt other than basic compound (C), an acid, a boron compound, a plasticizer, a filler, an antiblocking agent, a lubricant, a stabilizer, a surfactant, a coloring material, an UV absorber, an antistatic agent, a desiccating agent, a crosslinking agent, a reinforcing material such as various types of fiber, and other components.

From the viewpoint of improving the thermal stability, the metal salt other than the basic compound (C) is preferably an alkali metal salt and more preferably an alkaline-earth metal salt. When the EVOH contains a metal salt, the lower limit of the metal salt content is, for example, 1 ppm or more, more preferably 5 ppm or more, still more preferably 10 ppm or more, and most preferably 20 ppm or more, in terms of metal atoms contained in the metal salt with respect to the EVOH. When the EVOH contains a metal salt, the upper limit of the metal salt content is, for example, 10000 ppm or less, more preferably 5000 ppm or less, still more preferably 1000 ppm or less, and most preferably 500 ppm or less, in terms of metal atoms contained in the metal salt with respect to the EVOH. When the metal salt content is in the above-described range, the thermal stability of the EVOH during purging is improved.

The above-described acid is preferably a carboxylic acid compound, a phosphoric acid compound, or the like, from the viewpoint of capability of improving the thermal stability during melt-molding of the EVOH. When the EVOH contains a carboxylic acid compound, the carboxylic acid content (i.e., the carboxylic acid content in the resin composition containing the EVOH) is preferably 1 ppm or more, more preferably 10 ppm or more, and still more preferably 50 ppm or more. Also, the content of the carboxylic acid compound is preferably 10000 ppm or less, more preferably 1000 ppm or less, and still more preferably 500 ppm or less. When the EVOH contains a phosphoric acid compound, the phosphoric acid content (i.e., the content of the phosphoric acid compound in terms of a phosphate group in the resin composition containing the EVOH) is preferably 1 ppm or more, more preferably 10 ppm or more, and still more preferably 30 ppm or more. Also, the content of the phosphoric acid compound is preferably 10000 ppm or less, more preferably 1000 ppm or less, and still more preferably 300 ppm or less. When the content of the carboxylic acid compound or the phosphoric acid compound is in the above-described range, the EVOH exhibits improved thermal stability during purging.

When the EVOH contains the above-described boron compound, the content of the boron compound (i.e., the content of the boron compound in terms of boron in the resin composition containing the EVOH) is preferably 1 ppm or more, more preferably 10 ppm or more, and still more preferably 50 ppm or more. Also, the content of the boron compound is preferably 2000 ppm or less, more preferably 1000 ppm or less, and still more preferably 500 ppm or less. When the content of the boron compound is in the above-described range, the EVOH tends to exhibit improved thermal stability during purging.

The method for causing the resin composition containing the EVOH to incorporate the above-described carboxylic acid compound, phosphoric acid compound, or boron compound is not limited to particular methods. For example, the compound may be added to and kneaded with the composition containing the EVOH during pelletization of the composition. Other examples of the method include: adding the compound in the form of a dry powder; adding the compound in the form of a paste impregnated with a predetermined solvent; adding the compound in a state of being suspended in a predetermined liquid; adding the compound in the form of a solution obtained by dissolving the compound in a predetermined solvent; and immersing the compound in a predetermined solution. Of these methods, a method of adding the compound in the form of a solution obtained by dissolving the compound in a predetermined solvent and a method of immersing the compound in a predetermined solution are preferable from the viewpoint of capability of uniformly dispersing the compound in the EVOH. The predetermined solvent is not limited to particular solvents, and is preferably water from the viewpoint of the solubility of the compound to be added, cost, ease of handling, work environment safety, and the like.

### (Polyvinyl Alcohol)

Polyvinyl alcohol is a resin obtained through saponification of a polymer composed of vinyl ester monomers. Examples of the vinyl ester monomers include vinyl formate, vinyl acetate, vinyl propionate, vinyl valerate, vinyl caprate, vinyl laurate, vinyl stearate, 2,2,4,4-tetramethyl vinyl valerianate, vinyl benzoate, vinyl pivalate, and vinyl versatate. Of these, vinyl acetate, vinyl propionate, vinyl pivalate, and vinyl versatate are preferably used either alone or in the form of a mixture.

The degree of saponification of the polyvinyl alcohol is not limited to particular values, and is preferably 80 mol% or more, more preferably 90 mol% or more, and still more preferably 95 mol% or more.

### (Polyamide)

A polyamide is a polymer with amide bonds in its main chain. Examples of the polyamide include polycaproamide (nylon 6), poly-ω-aminoheptanoic acid (nylon 7), poly-ω-aminononanoic acid (nylon 9), polyundecamide (nylon 11), polylauryl lactam (nylon 12), polyethylenediamine adipamide (nylon 26), polytetramethylene adipamide (nylon 46), polyhexamethylene adipamide (nylon 66), polyhexamethylene sebacamide (nylon 610), polyhexamethylene dodecamide (nylon 612), polyoctamethylene adipamide (nylon 86), polydecamethylene adipamide (nylon 106), a caprolactam/lauryl lactam copolymer (nylon 6/12), a caprolactam/ω-aminononanoic acid copolymer (nylon 6/9), a caprolactam/hexamethylenediammonium adipate copolymer (nylon 6/66), a lauryl lactam/hexamethylenediammonium adipate copolymer (nylon 12/66), an ethylenediammonium adipate/hexamethylenediammonium adipate copolymer (nylon 26/66), a caprolactam/hexamethylenediammonium adipate/hexamethylenediammonium sebacate copolymer (nylon 6/66/610), an ethylenediammonium adipate/hexamethylenediammonium adipate/hexamethylenediammonium sebacate copolymer (nylon 26/66/610), polyhexamethylene isophthalamide (nylon 6I), polyhexamethylene terephthalamide (nylon 6T), a hexamethylene isophthalamide/hexamethylene terephthalamide copolymer (nylon 6I/6T), an 11-aminoundecanamido/hexamethylene terephthalamide copolymer, polynonamethylene terephthalamide (nylon 9T), polydecamethylene terephthalamide (nylon 10T), polyhexamethylene cyclohexylamide, polynonamethylene cyclohexylamide, and modified polyamides obtained by modifying these polyamides with an aromatic amine such as methylenebenzylamine or meta-xylenediamine. Other examples of the polyamide include meta-xylylenediammonium adipate.

A polyamide is obtained by melt polymerization, interfacial polymerization, solution polymerization, bulk polymerization, solid-state polymerization, or a combination thereof.

### (Polyacrylate)

A polyacrylate can be prepared by polymerizing acrylate monomers such as methyl acrylate, ethyl acrylate, n-propyl acrylate, isopropyl acrylate, n-butyl acrylate, isobutyl acrylate, pentyl acrylate, 2-ethylhexyl acrylate, decyl acrylate, dodecyl acrylate, stearyl acrylate, α-chloroethyl acrylate, cyclohexyl acrylate, phenyl acrylate, methoxyethyl acrylate, ethoxyethyl acrylate, methoxypropyl acrylate, or ethoxypropyl acrylate, and then hydrolyzing the resulting polymerization product. A polyacrylate can also be obtained by polymerizing acrylonitrile and hydrolyzing the resulting polymerization product.

Examples of a salt as a component of the polyacrylate include salts of alkali metals such as sodium, potassium, and lithium, salts of alkaline-earth metals such as calcium, magnesium, and barium, and salts of ammonium such as quaternary ammonium and quaternary alkylammonium. In particular, sodium salts, which are most commonly used, are preferable.

### (Polyethylene Glycol)

A polyethylene glycol is produced through addition polymerization of ethylene oxide with a compound having two or more active hydrogens, such as ethylene glycol or diethylene glycol.

For addition of ethylene oxide, an alkali metal compound may be used as a catalyst. Examples of the alkali metal compound include hydroxides of alkali metals (e.g., lithium, sodium, and potassium) and alkali metal alcoholates (e.g., sodium methylate and potassium methylate). Of these, sodium hydroxide and potassium hydroxide are preferable from the viewpoint of reactivity. One type of alkali metal compound may be used, or two or more types of alkali metal compounds may be used in combination.

### (Polyacrylamide)

As the polyacrylamide, a homopolymer of an acrylamide or a copolymer of an acrylamide with one or more other copolymerizable monomers, each having amide bonds, is used.

The method for producing the polyacrylamide is not limited to particular methods, and the polyacrylamide is produced by a method such as: (i) polymerizing an acrylamide in methanol using 2,2'-azobisisobutyronitrile as an initiator; (ii) irradiating an acrylamide with light in ethanol; (iii) causing redox polymerization of an acrylamide in an aqueous solution; or (vi) irradiating an acrylamide in a solid state with γ-rays.

Examples of the other monomer(s) that can be copolymerized with an acrylamide include acrylic acid, methacrylic acid, styrenesulfonic acid, ethylene sulfonic acid, 2-acrylamide-2-methylpropanesulfonic acid, dimethylaminoethyl methacrylate ester, dimethylaminopropyl methacrylate, dimethylaminoethyl acrylate, dimethylaminopropyl acrylate, diallyldimethylammonium chloride and quaternary salts thereof, and C₁ to C₂₄ alkyl esters of acrylic acids such as methyl (meth)acrylate, ethyl (meth)acrylate, and butyl (meth)acrylate.

### (Water (B))

Water (B) dissolves the basic compound (C) to be described below to prepare an aqueous solution having a desired pH and also diffuses the above-described EVOH widely through a molding machine, thereby promoting the discharge of a resin to be purged present in the molding machine.

Examples of the water (B) as one of the components of the resin composition of the present invention include pure water, ion-exchange water, distilled water, and tap water, as well as combinations thereof. Ion-exchange water is preferable in order to prevent unintentional contamination with salts.

In the resin composition of the present invention, the mass ratio (A)/(B) of the hydrophilic resin (A) to the water (B) is 66/34 to 90/10, preferably 70/30 to 90/10, more preferably 75/25 to 90/10, and still more preferably 80/20 to 88/12. When the mass ratio of the hydrophilic resin (A) to the water (B) is in the above-described range, uneven water distribution on the surface of the purging agent composed of the resin composition of the present invention can be suppressed. This is preferable in terms of safety because it can prevent adhesion of the purging agent to a hopper at the time of introducing the purging agent and also can prevent the aqueous solution containing the basic compound (C) from scattering out from the purging agent. The hydrophilic resin (A) in the resin composition of the present invention has a high affinity for water and binds to water to a proper extent via hydrogen bonds. Accordingly, the resin composition can release the liquid component required for purging in the molding machine during purging, and besides, the resin composition can maintain a viscosity sufficient for discharging a resin to be purged to the outside of the molding machine. Moreover, the liquid component in an amount more than necessary does not remain in the molding machine during purging, whereby defective feeding can be reduced.

In the resin composition according to a first embodiment of the present invention, the water (B) is one of the important components for allowing the resin composition to exhibit a purging function for a resin to be purged. In contrast, in the resin composition according to a second non- claimed embodiment of the present disclosure to be described below, the water (B) may be one of optional components. That is, although the water (B) needs to be contained as a constituent component of the resin composition passing through a molding machine at the time of purging a resin to be purged, the purging agent before being supplied to the molding machine need not necessarily contain the water (B) in advance. For example, when supplying the purging agent to a molding machine, the water (B) may be supplied to the molding machine separately from the purging agent and mixed with the components of the purging agent in the molding machine to form the resin composition of the present invention.

In the resin composition of the present invention, the water (B) and the hydrophilic resin (A) may be contained in the form of a water-containing hydrophilic resin obtained by blending them together.

The method for preparing the water-containing hydrophilic resin is not limited to particular methods, and examples of the method include: spraying the water (B) on the hydrophilic resin (A); immersing the hydrophilic resin (A) in the water (B); bringing the hydrophilic resin (A) into contact with water vapor, which is one form of the water (B); and extruding the hydrophilic resin (A) together with the water (B). More specific examples of the method include: autoclaving the hydrophilic resin (A) in the presence of the water (B); and introducing the hydrophilic resin (A) into an extruder and then causing the hydrophilic resin (A) to undergo moisture extrusion while adding the water (B) thereto at some point in the extrusion process.

### (Basic Compound (C))

The basic compound (C) forms an aqueous solution when mixed with the above-described water (B), and plays a role of promoting discharge of a resin to be purged present in a molding machine by rendering the conditions inside the molding machine alkaline (preferably, strongly alkaline).

Examples of the basic compound (C) include alkali metal carbonates, alkali metal bicarbonates, alkali metal phosphates, alkali metal acetates, hydroxides of alkali metals, ammonia, and primary to tertiary amines, as well as combinations thereof.

When the water (B) and the hydrophilic resin (A) together form a water-containing hydrophilic resin, examples of the basic compound (C) include alkali metal carbonates, alkali metal bicarbonates, alkali metal phosphates, alkali metal acetates, hydroxides of alkali metals, ammonia, and primary to tertiary amines, as well as combinations thereof. On the other hand, when the water (B) and the basic compound (C) together form an alkali aqueous solution, examples of the basic compound (C) include alkali metal carbonates, alkali metal bicarbonates, alkali metal phosphates, alkali metal acetates, ammonia, and primary to tertiary amines, as well as combinations thereof.

Examples of the alkali metal carbonates include sodium carbonate, potassium carbonate, and lithium carbonate, as well as combinations thereof. Examples of the alkali metal bicarbonates include sodium hydrogen carbonate and potassium hydrogen carbonate, as well as combinations thereof. Examples of the alkali metal phosphates include trisodium phosphate, disodium hydrogen phosphate, monosodium dihydrogen phosphate, tripotassium phosphate, dipotassium hydrogen phosphate, monopotassium dihydrogen phosphate, trilithium phosphate, dilithium hydrogen phosphate, and monolithium dihydrogen phosphate, as well as combinations thereof. Examples of the alkali metal acetates include sodium acetate, potassium acetate, and lithium acetate, as well as combinations thereof. Examples of the hydroxides of alkali metals include sodium hydroxide, potassium hydroxide, and lithium hydroxide, as well as combinations thereof. Sodium carbonate and potassium carbonate are preferable from the viewpoint of their sufficient purging ability and capability of ensuring the safety of operators who use the purging agent.

The content of the basic compound (C) is 0.25 parts by mass or more, preferably 0.3 parts by mass or more, and more preferably 0.4 parts by mass or more, with respect to 100 parts by mass of the hydrophilic resin (A). Also, the content of the basic compound (C) is 7 parts by mass or less, preferably 6 parts by mass or less, and more preferably 4 parts by mass or less, with respect to 100 parts by mass of the hydrophilic resin (A). When the content of the basic compound (C) is less than 0.25 parts by mass, an aqueous solution composed of the basic compound (C) and the water (B) has a near-neutral pH, whereby the efficiency of discharging a resin to be purged present in the molding machine tends to decrease. When the content of the basic compound (C) is more than 7 parts by mass, the alkali aqueous solution is saturated, whereby salt precipitation is liable to be caused during storage of the purging resin.

When the water (B) and the basic compound (C) together form an alkali aqueous solution, the pH of the resin composition of the present invention is 10 to 13. When the pH is less than 8, the resulting resin composition tends to exhibit decreased efficiency of discharging a resin to be purged present in a molding machine.

### (Thermoplastic Resin (D))

The resin composition of the present invention may further contain a thermoplastic resin (D), in addition to the above-described hydrophilic resin (A), water (B), and basic compound (C). The thermoplastic resin (D) is a thermoplastic resin that is different from the hydrophilic resin (A), and is added to the resin composition of the present invention for the purpose of, for example, improving the compatibility of the resin composition of the present invention with a resin to be purged present in a molding machine and improving the safety of operators.

Examples of the thermoplastic resin (D) include EVOH resins, vinyl alcohol resins (such as PVA resins) other than EVOH resins, PA resins, polyolefin resins (linear low-density polyethylenes, low-density polyethylenes, medium-density polyethylenes, high-density polyethylenes, ethylene-vinyl acetate copolymers, ionomers, ethylene-propylene copolymers, ethylene-acrylic ester copolymers, polypropylenes, propylene-α-olefin (a-olefin having 4 to 20 carbon atoms) copolymers, polybutenes, polypentenes, and the like), modified polyolefin resins obtained through graft modification of polyolefin resins with an unsaturated carboxylic acid, polyester resins, polyvinyl chloride resins, thermoplastic polyurethane resins, polyvinylidene chloride, acrylic resins, polystyrene resins, vinyl ester resins, polyester elastomers, polyurethane elastomers, chlorinated polyethylenes, chlorinated polypropylenes, and aromatic or aliphatic polyketones, as well as combinations thereof.

The content of the thermoplastic resin (D) is preferably 1 part by mass or more, more preferably 50 parts by mass or more, and still more preferably 100 parts by mass or more, with respect to 100 parts by mass of the hydrophilic resin (A). The content of the thermoplastic resin (D) is preferably 10000 parts by mass or less with respect to 100 parts by mass of the hydrophilic resin (A). When the content of the thermoplastic resin (D) is in the above-described range, the compatibility of the resin composition of the present invention with a resin to be purged present in a molding machine is improved, whereby the efficiency of discharging the resin to be purged present in the molding machine is further improved and the safety of operators is also improved.

A suitable range of the upper limit of the content of the thermoplastic resin (D) may vary depending on the viscosity of the thermoplastic resin (D) to be used. When the thermoplastic resin (D) has a low viscosity (MFR at 190°C is equal to or more than 1 g/10 minutes), the upper limit is preferably 990 parts by mass or less, more preferably 800 parts by mass or less, and still more preferably 600 parts by mass or less, with respect to 100 parts by mass of the hydrophilic resin (A).

On the other hand, when the thermoplastic resin (D) has a high viscosity (MFR at 190°C is less than 1 g/10 minutes), the upper limit is preferably 10000 parts by mass or less, more preferably 5000 parts by mass or less, still more preferably 2000 parts by mass or less, and particularly preferably 1500 parts by mass or less, with respect to 100 parts by mass of the hydrophilic resin (A). When the upper limit is in the above-described range, the effect of the present invention can be obtained more effectively. However, the above-described range may vary depending on the molding machine to be used.

### (Other Additives)

The resin composition of the present invention may further contain one or more other additives to the extent that the effects of the present invention are not impaired. Examples of other additives include abrasives, fillers, thermostabilizers, processing aids, antiblocking agents, antistatic agents, coupling agents, antioxidants, lubricants, foaming agents, surfactants, and plasticizers, as well as combinations thereof. In particular, an abrasive is used to discharge a resin to be purged present in the molding machine by way of physical polishing action, and examples thereof include those composed of inorganic compounds such as alumina, zirconia, silica, titanium dioxide, and calcium carbonate.

In the resin composition of the present invention, the content of the above-described other additive(s) is not limited to particular values, and can be set as appropriate by those skilled in the art within a range where the purging efficiency achieved by the combination of the above-described hydrophilic resin (A), water (B) and basic compound (C) is not impaired.

### (Purging Agent)

The purging agent according to the first embodiment of the present invention is composed of the above-described resin composition, namely, a resin composition containing a hydrophilic resin (A), water (B), and a basic compound (C), and when necessary, any of optional components such as a thermoplastic resin (D) that is different from the hydrophilic resin (A) and other additives. In the present specification, the purging agent composed of the above-described resin composition is referred to as a "first purging agent".

The purging agent according to the non-claimed second embodiment of the present disclosure is composed of the above-described resin composition not containing the water (B), namely, a resin composition containing a hydrophilic resin (A) and a basic compound (C), and when necessary, any of optional components such as a thermoplastic resin (D) that is different from the hydrophilic resin (A) and other additives. In the present specification, the purging agent composed of the above-described resin composition excluding the water (B) is referred to as a "second purging agent".

The types and the contents of the hydrophilic resin (A), the basic compound (C), the thermoplastic resin (D) that is different from the hydrophilic resin (A), and the other additives in the second purging agent can be selected similarly to the types and the contents of those contained in the first purging agent. Also, the ethylene unit content and the degree of saponification of the hydrophilic resin (A) in the second purging agent can be set similarly to those of the hydrophilic resin (A) contained in the first purging agent.

The first purging agent of the present invention is excellent in safety because an operator does not have to adjust the contents of the components of the purging agent when introducing the purging agent into a molding machine. On the other hand, the second purging agent does not contain the water (B) in advance, and thus, the mass and the volume of the purging agent as a whole can be made smaller than those of the first purging agent. This can improve the efficiency in transportation and storage of the purging agent.

In the present invention, the first purging agent can be used by introducing it as it is to a molding machine in which a resin to be purged is present, for example, through a hopper.

On the other hand, the second purging agent can be used by adding a predetermined amount of the water (B) thereto before use to prepare a resin composition of the present invention and then introducing the thus-obtained composition to a molding machine in which a resin to be purged is present, for example, through a hopper. Alternatively, the second purging agent also can be used by introducing the purging agent in a state of not containing the water (B) into a molding machine in which a resin to be purged is present, for example, through a hopper, then adding the water (B) to the purging agent from a part separately provided in the molding machine (e.g., an orifice provided so as to pass through a cylinder), and kneading them together in the cylinder, thereby preparing the resin composition of the present invention.

Molding machines to which the first purging agent and the second purging agent are applicable refer to various types of commonly used molding machines and passages through which resins flow in the molding machines. Molding machines used in the present invention are not limited to particular types of molding machine, and examples thereof include extruders (including single-screw extruders and twin-screw extruders, for example), injection molding machines, monolayer film molding machines, monolayer inflation molding machines, co-extrusion sheet molding machines, co-extrusion film molding machines, multi-layer blow molding machines, and co-injection molding machines, as well as piping, feed blocks, dies, and the like of each molding machine.

### (Method for Purging Molding Machine in Which Resin to be Purged is Present)

In the purging method of the present invention, a resin composition containing the above-described hydrophilic resin (A), water (B) and basic compound (C) and when necessary, the thermoplastic resin (D) that is different from the hydrophilic resin (A) and/or one or more other additives as an optional component(s) is supplied to a molding machine and the resin composition is discharged together with a resin to be purged. In the present specification, the purging method performed using the resin composition as described above is referred to as a "first purging method".

In the first purging method of the present invention, the resin composition may be supplied to a molding machine by, for example, separately supplying the hydrophilic resin (A), the water (B), and the basic compound (C) and when necessary, the thermoplastic resin (D) that is different from the hydrophilic resin (A) and/or one or more other additives as an optional component(s) to the molding machine through a hopper and/or another part (e.g., an orifice provided so as to pass through a cylinder) of the molding machine. Preferably, the resin composition is supplied to the molding machine in the form of the above-described first purging agent or second purging agent.

The following description is directed to an embodiment where a molding machine is an extruder. When the resin composition is supplied to an extruder in the form of the first purging agent of the present invention, the first purging agent of the present invention is introduced into the extruder as it is, for example, through a hopper of the extruder, and the first purging agent is then supplied to a cylinder by rotating a screw provided in the cylinder.

When the resin composition is supplied to an extruder in the form of the second purging agent, a predetermined amount of the water (B) is added to the second purging agent before use, then the resulting composition is introduced into the extruder, for example, through a hopper of the extruder, and the second purging agent is supplied to a cylinder by rotating a screw provided in the cylinder. In this case, in order to prevent corrosion of metal parts such as the hopper, the basic compound (C) as a component of the second purging agent is preferably selected from the above-listed options excluding the hydroxides of alkali metals.

Alternatively, the second purging agent is supplied by introducing the second purging agent in a state of not containing the water (B) into an extruder, for example, through a hopper of the extruder, adding the water (B) to the purging agent from a part separately provided in the molding machine (e.g., an orifice provided so as to pass through a cylinder), and kneading them together by rotating a screw in the cylinder.

When supplying the resin composition to the molding machine, the purge temperature in the molding machine (i.e., the temperature of the melting region of the molding machine) can be adjusted as appropriate depending on the specifications of the molding machine to be used and the viscosity of the thermoplastic resin (D). However, a suitable range of the purge temperature may vary depending on, in particular, the viscosity of the thermoplastic resin (D) to be used. When the thermoplastic resin (D) has a low viscosity (MFR at 190°C is equal to or more than 1 g/10 minutes), the temperature is preferably set to 105° C to 170° C and more preferably 110° C to 160° C. When the temperature is lower than 105°C, the resin composition in the molding machine may not be sufficiently melted, whereby efficient discharge of a resin to be purged may be difficult. When the temperature is higher than 170°C, the viscosity of the resin may decrease, and this may result in a decrease in purging efficiency.

On the other hand, when the thermoplastic resin (D) has a high viscosity (MFR at 190°C is less than 1 g/10 minutes), the temperature is preferably set to 150° C to 230° C, more preferably 170° C to 210° C, and still more preferably 180° C to 200° C. When the temperature is lower than 150°C, the resin composition in the molding machine has a high viscosity, whereby efficient discharge of a resin to be purged may be difficult. When the temperature is higher than 230°C, the viscosity of the resin may decrease, and this may result in a significant decrease in purging efficiency.

The amount of the resin composition supplied to the molding machine is, for example, preferably not less than 1 time and not more than 1000 times and more preferably not less than 2 times and not more than 100 times the volume of the residual resin to be purged in the molding machine (for example, this volume is a volume obtained by subtracting the screw capacity from the cylinder capacity when the molding machine is an extruder). When the amount of the supplied resin composition is less than 1 time the volume of the residual resin to be purged in the molding machine, there is a risk that the resin to be purged may remain in the molding machine. When the amount of the supplied resin composition is more than 1000 time the volume of the residual resin to be purged in the molding machine, an excess amount of the resin composition is supplied in spite of the fact that the purging effect is already sufficiently exhibited in the molding machine, and this may result in a decrease in utilization efficiency of the purging agent.

Alternatively, instead of the above-described first purging method, another non - claimed purging method may be performed in such a manner that an alkali aqueous solution containing the water (B) and the basic compound (C) is supplied to a molding machine and the alkali aqueous solution is discharged together with a resin to be purged. In the present specification, the purging method performed using the alkali aqueous solution as described above is referred to as a "second purging method".

The water (B) used in the second purging method is the same as that used in the resin composition of the present invention.

Examples of the basic compound (C) used in the second purging method include alkali metals such as lithium, sodium, and potassium. Examples of a salt that can be used as the basic compound (C) include carbonates, bicarbonates, and phosphates.

Examples of the basic compound (C) include sodium carbonate, potassium carbonate, lithium carbonate, sodium hydrogen carbonate, potassium hydrogen carbonate, trisodium phosphate, disodium hydrogen phosphate, monosodium dihydrogen phosphate, tripotassium phosphate, dipotassium hydrogen phosphate, monopotassium dihydrogen phosphate, trilithium phosphate, dilithium hydrogen phosphate, monolithium dihydrogen phosphate, sodium acetate, potassium acetate, lithium acetate, and combinations thereof. From the viewpoint of ensuring the safety of operators, sodium carbonate and potassium carbonate are preferable.

The pH of the alkali aqueous solution supplied to the molding machine is preferably 8 to 14 and more preferably 10 to 13. When the pH is less than 8, the resulting alkali aqueous solution tends to exhibit decreased efficiency of discharging a resin to be purged present in a molding machine.

In the second purging method, the alkali aqueous solution may be supplied to a molding machine by, for example, mixing the water (B) and the basic compound (C) beforehand to prepare an alkali aqueous solution and supplying the resulting alkali aqueous solution to the molding machine through a hopper and/or another part (e.g., an orifice provided so as to pass through a cylinder) of the molding machine. However, an alkali aqueous solution containing a hydroxide as the basic compound (C) may cause undesirable corrosion when it adheres to metal parts such as the hopper. Accordingly, it is preferable to introduce the alkali aqueous solution into the cylinder through a tube formed of a chemical-resistant material (e.g., silicone rubber, Teflon^{®}, or the like) utilizing the flowability of the alkali aqueous solution, thereby reducing the chances that the alkali aqueous solution will be brought into contact with the metal parts excluding the interior of the molding machine. Alternatively, the alkali aqueous solution may be supplied by separately introducing the water (B) and the basic compound (C) through the hopper and/or another part (e.g., the orifice provided so as to pass through the cylinder) of the molding machine and preparing the alkali aqueous solution inside the molding machine. It is also preferable to supply the hydrophilic resin (A) and the different thermoplastic resin (D) together with the alkali aqueous solution.

When supplying the alkali aqueous solution to the molding machine, the temperature in the molding machine (i.e., the temperature of the melting region of the molding machine) is set to preferably 105°C to 230°C and more preferably 110°C to 210°C. When the temperature is lower than 105°C, efficient discharge of a resin to be purged may be difficult. When the temperature is higher than 230°C, some of the liquid component may vaporize, whereby the alkali aqueous solution may not act efficiently on the resin to be purged.

When the alkali aqueous solution is supplied according to the second purging method, the molding machine may be washed thereafter using a proper amount of water (e.g., pure water, ion-exchange water, distilled water, tap water, or a combination thereof) in order to prevent the occurrence of corrosion in the molding machine.

The present invention enables purging of various types of resins to be purged. The resin to be purged is, for example, a thermoplastic resin or a mixture containing the thermoplastic resin. Examples of the thermoplastic resin as the resin to be purged include EVOH resins, vinyl alcohol resins (such as PVA resins) other than EVOH resins, PA resins, polyolefin resins (linear low-density polyethylenes, low-density polyethylenes, medium-density polyethylenes, high-density polyethylenes, ethylene-vinyl acetate copolymers, ionomers, ethylene-propylene copolymers, ethylene-acrylic ester copolymers, polypropylenes, propylene-α-olefin (a-olefin having 4 to 20 carbon atoms) copolymers, polybutenes, polypentenes, and the like), modified polyolefin resins obtained through graft modification of polyolefin resins with an unsaturated carboxylic acid, polyester resins, polyvinyl chloride resins, thermoplastic polyurethane resins, polyvinylidene chloride, acrylic resins, polystyrene resins, vinyl ester resins, polyester elastomers, polyurethane elastomers, chlorinated polyethylenes, chlorinated polypropylenes, and aromatic or aliphatic polyketones, as well as combinations thereof.

The resin to be purged for which it is particularly desirable to use the present invention is a collected scrap. The scrap as used herein may be: (1) an out-of-specification product or a trim produced during the process of producing a multilayer structure; or (2) a packaging material collected after being used in the market. Each layer of the multilayer structure may be formed of any of the resins listed above as examples of the resin to be purged.

Specifically, for example, there are often cases where scraps produced in the process of producing a multilayer structure are collected and the collected products are melt-molded again in an extruder to recycle them as at least one of layers of a newly produced multilayer structure. In such a recycling operation, the resin composition used to form the multilayer structure may be severely deteriorated by being subjected to thermal history during melting and kneading in the extruder. Also, in the case where the resin composition used to form the multilayer structure contains a resin that is reactive during melting and kneading, the resin composition may be severely deteriorated. The purging agent of the present invention also can be effectively used for the resin to be purged in a state of more firmly adhering to a flow passage as a result of such severe deterioration.

### Examples

The present invention will be described in detail with reference to examples. It is to be noted, however, that the present invention is not limited to these examples by any means.

Components used in examples and comparative examples were as follows.

### (Hydrophilic Resin (A))

- A1: EVOH ("EVAL F101B" manufactured by Kuraray Co., Ltd., the ethylene unit content: 32 mol%, the degree of saponification: 99 mol% or more)
- A2: EVOH ("EVAL L171B" manufactured by Kuraray Co., Ltd., the ethylene unit content: 27 mol%, the degree of saponification: 99 mol% or more)
- A3: EVOH ("EVAL E105B" manufactured by Kuraray Co., Ltd., the ethylene unit content: 44 mol%, the degree of saponification: 99 mol% or more)
- A4: polyvinyl alcohol ("POVAL 29-99" manufactured by Kuraray Co., Ltd., the degree of saponification: 99 mol% or more)
- A5: polyamide ("UBE NYLON 1024B" manufactured by Ube Industries, Ltd.) (nylon 6)
- A6: EVOH ("EVAL G176B" manufactured by Kuraray Co., Ltd., the ethylene unit content: 48 mol%, the degree of saponification: 99 mol% or more)

### (Thermoplastic Resin (D)

- d1: low-density polyethylene ("LC-600A" manufactured by Japan Polyethylene Corporation, MFR: 7 g/10 minutes)
- d2: low-density polyethylene ("UJ790" manufactured by Japan Polyethylene Corporation, MFR: 50 g/10 minutes)
- d3: high-density polyethylene ("HB111R" manufactured by Japan Polyethylene Corporation, MFR: 0.03 g/10 minutes)

### (Formulation Example 1: Production of Resin Composition (E1))

100 parts by mass of the EVOH (A1) was autoclaved at 135°C for 1 hour, and a water-containing EVOH resin containing 32 parts by mass of ion-exchange water was immersed in a 11 mass% aqueous sodium carbonate solution containing 260 parts by mass of ion-exchange water and 27 parts by mass of sodium carbonate at room temperature for 3 hours. Thereafter, the excess aqueous sodium carbonate solution was removed using a centrifuge. As a result, a water-containing EVOH resin containing 100 parts by mass of the EVOH (A1), 32 parts by mass of ion-exchange water, and 3.2 parts by mass of sodium carbonate was obtained. 264 parts by mass of the low-density polyethylene (d1) was mixed with the thus-obtained water-containing EVOH resin through dry blending. Thus, a resin composition (E1) was obtained. The pH of the thus-obtained resin composition (E1) was measured using a pH meter ("HI-9812-5" manufactured by Hannah Instruments Japan). The results obtained are shown in Table 1.

### (Formulation Example 2: Production of Resin Composition (E2))

A resin composition (E2) was obtained in the same manner as in Formulation Example 1, except that the EVOH (A2) was used instead of the EVOH (A1). The results obtained are shown in Table 1.

### (Formulation Example 3: Production of Resin Composition (E3))

A resin composition (E3) was obtained in the same manner as in Formulation Example 1, except that the EVOH (A3) was used instead of the EVOH (A1). The results obtained are shown in Table 1.

### (Formulation Example 4: Production of Resin Composition (E4))

100 parts by mass of the polyvinyl alcohol (A4) was immersed in a 10 mass% aqueous sodium carbonate solution containing 180 parts by mass of ion-exchange water and 18 parts by mass of sodium carbonate at 60°C for 8 hours. Thereafter, the excess aqueous sodium carbonate solution was removed using a centrifuge. As a result, a water-containing polyvinyl alcohol resin containing 100 parts by mass of the polyvinyl alcohol (A4), 32 parts by mass of ion-exchange water, and 3.2 parts by mass of sodium carbonate was obtained. 264 parts by mass of the low-density polyethylene (d1) was mixed with the thus-obtained water-containing polyvinyl alcohol resin through dry blending. Thus, a resin composition (E4) was obtained. The pH of the thus-obtained resin composition (E4) was measured using a pH meter ("HI-9812-5" manufactured by Hannah Instruments Japan). The results obtained are shown in Table 1.

### (Formulation Example 5: Production of Resin Composition (E5))

100 parts by mass of the polyamide (A5) was autoclaved at 135°C for 3 hours to obtain a water-containing polyamide resin containing 30 parts by mass of ion-exchange water. The thus-obtained polyamide resin was immersed in a 11 mass% aqueous sodium carbonate solution containing 235 parts by mass of ion-exchange water and 25 parts by mass of sodium carbonate at room temperature for 3 hours. Thereafter, the excess aqueous sodium carbonate solution was removed using a centrifuge. As a result, a water-containing polyamide resin containing 100 parts by mass of the polyamide (A5), 32 parts by mass of ion-exchange water, and 3.2 parts by mass of sodium carbonate was obtained. 264 parts by mass of the low-density polyethylene (d1) was mixed with the thus-obtained water-containing polyamide resin through dry blending. Thus, a resin composition (E5) was obtained. The pH of the thus-obtained resin composition (E5) was measured using a pH meter ("HI-9812-5" manufactured by Hannah Instruments Japan). The results obtained are shown in Table 1.

### (Formulation Examples 6 to 9: Production of Resin Compositions (E6) to (E9))

Resin compositions (E6) to (E9) were obtained in the same manner as in Formulation Example 1, except that the blended amounts of ion-exchange water, sodium carbonate, and the low-density polyethylene (d1) were set as shown in Table 1. The results obtained are shown in Table 1.

### (Formulation Example 10: Production of Resin Composition (E10)

A resin composition (E10) was obtained in the same manner as in Formulation Example 1, except that 2.5 parts by mass of trisodium phosphate was used instead of the sodium carbonate. The results obtained are shown in Table 1.

### (Formulation Example 11: Production of Resin Composition (E11))

A resin composition (E11) was obtained in the same manner as in Formulation Example 1, except that 1.3 parts by mass of sodium hydroxide was used instead of the sodium carbonate. The results obtained are shown in Table 1.

### (Formulation Example 12: Production of Resin Composition (E12)

A resin composition (E12) was obtained in the same manner as in Formulation Example 1, except that 3.2 parts by mass of potassium carbonate was used instead of the sodium carbonate. The results obtained are shown in Table 1.

### (Formulation Example 13: Production of Resin Composition (E13))

A water-containing EVOH resin containing 100 parts by mass of the EVOH (A1) and 32 parts by mass of ion-exchange water was immersed in a 11 mass% ammonia water containing 260 parts by mass of ion-exchange water and 32 parts by mass of ammonia at room temperature for 3 hours in a sealed condition. Thereafter, the excess aqueous ammonia solution was removed using a centrifuge. As a result, a water-containing EVOH resin containing 100 parts by mass of the EVOH (A1), 32 parts by mass of ion-exchange water, and 3.2 parts by mass of ammonia was obtained. 264 parts by mass of the low-density polyethylene (d1) was mixed with the thus-obtained water-containing EVOH resin through dry blending. Thus, a resin composition (E13) was obtained.

### (Formulation Example 14: Production of Resin Composition (E14))

A resin composition (E14) was obtained in the same manner as in Formulation Example 1, except that the blended amounts of ion-exchange water and sodium carbonate were set as shown in Table 1 and that the low-density polyethylene (d1) was not used. The results obtained are shown in Table 1.

### (Formulation Example 15: Production of Resin Composition (E15)

A resin composition (E15) was obtained in the same manner as in Formulation Example 1, except that: the blended amounts of ion-exchange water and sodium carbonate were set as shown in Table 1; 244.4 parts by mass of the low-density polyethylene (d1) was used; and 12.2 parts by mass of the low-density polyethylene (d2) was further used. The results obtained are shown in Table 1.

### (Formulation Example 16: Production of Resin Composition (E16)

A resin composition (E16) was obtained in the same manner as in Formulation Example 1, except that 3.2 parts by mass of sodium acetate was used instead of the sodium carbonate. The results obtained are shown in Table 1.

### (Formulation Example 17: Production of Resin Composition (E17))

A resin composition (E17) was obtained by mixing 3.3 parts by mass of a 9 mass% aqueous sodium carbonate solution (pH = 12.0) and 95 parts by mass of the low-density polyethylene (d1) without using the EVOH (A1). The results obtained are shown in Table 1.

### (Formulation Example 18: Production of Resin Composition (E18)

A resin composition (E18) was obtained by mixing 5.5 parts by mass of a 9 mass% ammonia water (pH = 11.0) and 94 parts by mass of the low-density polyethylene (d1) without using the EVOH (A1). The results obtained are shown in Table 1.

### (Formulation Example 19: Production of Resin Composition (C1))

A resin composition (C1) was obtained in the same manner as in Formulation Example 1, except that 0.9 parts by mass of ion-exchange water and 0.2 parts by mass of sodium carbonate were used. The results obtained are shown in Table 1.

### (Formulation Example 20: Production of Resin Composition (C2))

A resin composition (C2) was obtained in the same manner as in Formulation Example 1, except that 60 parts by mass of ion-exchange water and 12 parts by mass of sodium carbonate were used. The results obtained are shown in Table 1.

### (Formulation Example 21: Production of Resin Composition (C3))

A resin composition (C3) was obtained in the same manner as in Formulation Example 1, except that 268 parts by mass of the low-density polyethylene (d1) was used and that sodium carbonate was not used. The results obtained are shown in Table 1.

### (Formulation Example 22: Production of Resin Composition (E19))

A resin composition (E19) was obtained in the same manner as in Formulation Example 12, except that 1188 parts by mass of the high-density polyethylene (d3) was used. The results obtained are shown in Table 1.

**[Table 1]**

| | Resin Composition | Hydrophilic Resin (A) | | | Water (B) | EVOH(A) /Water(B) | Basic Compound (C) | | Thermoplastic Resin (D) | pH of Resin Composition |
|---|---|---|---|---|---|---|---|---|---|---|
| | | Type | Ethylene Unit Content (mol%) | Content (Parts by Mass) | Content (Parts by Mass) | | Type | Content (Parts by Mass) | Content (Parts by Mass) | |
| Formulation Example 1 | (E1) | A1 | 32 | 100 | 32 | 76/24 | Na₂CO₃ | 3.2 | 264 | 12.0 |
| Formulation Example 2 | (E2) | A2 | 27 | 100 | 32 | 76/24 | Na₂CO₃ | 3.2 | 264 | 12.0 |
| Formulation Example 3 | (E3) | A3 | 44 | 100 | 32 | 76/24 | Na₂CO₃ | 3.2 | 264 | 12.0 |
| Formulation Example 4 | (E4) | A4 | - | 100 | 32 | 76/24 | Na₂CO₃ | 3.2 | 264 | 12.0 |
| Formulation Example 5 | (E5) | A5 | - | 100 | 32 | 76/24 | Na₂CO₃ | 3.2 | 264 | 12.0 |
| Formulation Example 6 Formulation Example 7 | (E6) | A1 | 32 | 100 | 22.2 | 82/18 | Na₂Ca₃ | 2.2 | 244.4 | 12.0 |
| | (E7) | A1 | 32 | 100 | 60.0 | 67/33 | Na₂CO₃ | 5.0 | 300.0 | 12.0 |
| Formulation Example 8 | (E8) | A1 | 32 | 100 | 32 | 76/24 | Na₂CO₃ | 0.3 | 264 | 10.5 |
| Formulation Example 9 | (E9) | A1 | 32 | 100 | 32 | 76/24 | Na₂CO₃ | 6.4 | 264 | 12.4 |
| Formulation Example 10 | (E10) | A1 | 32 | 100 | 32 | 76/24 | Na₃PO₄ | 2.5 | 264 | 12.9 |
| Formulation Example 11 | (E11) | A1 | 32 | 100 | 32 | 76/24 | NaOH | 1.3 | 264 | 13.3 |
| Formulation Example 12 | (E12) | A1 | 32 | 100 | 32 | 76/24 | K₂CO₃ | 3.2 | 264 | 12.4 |
| Formulation Example 13 | (E13) | A1 | 32 | 100 | 32 | 76/24 | NH₃ | 3.2 | 264 | 11.0 |
| Formulation Example 14 | (E14) | A1 | 32 | 100 | 33.8 | 75/25 | Na₂CO₃ | 3.4 | - | 12.0 |
| Formulation Example 15 | (E15) | A1 | 32 | 100 | 18.5 | 84/18 | Na₂CO₃ | 1.9 | 244.4+12.2¹⁾ | 12.0 |
| Formulation Example 16 | (E16) | A1 | 32 | 100 | 32 | 76/24 | AcONa | 3.2 | 284 | 9.2 |
| Formulation Example 17 | (E17) | - | - | 0 | 3 | 0/100 | NB₂CO₃ | 0.3 | 95 | 12.0 |
| Formulation Example 18 | (E18) | - | - | 0 | 5 | 0/100 | NH₃ | 0.5 | 94 | 11.0 |
| Formulation Example 19 Formulation Example 20 | (C1) | A1 | 32 | 100 | 0.9 | 99/1 | Na₂CO₃ | 0.2 | 264 | 12.7 |
| | (C2) | A1 | 32 | 100 | 80 | 83/38 | Na₂CO₃ | 12 | 264 | 12.4 |
| Formulation Example 21 | (C3) | A1 | 33 | 100 | 32 | 76/24 | - | - | 268 | 6.8 |
| Formulation Example 22 | (E19) | A1 | 32 | 100 | 32 | 76/24 | K₂CO₃ | 3.2 | 1188 | 12.4 |

| | | | | | | | | | | |
|---|---|---|---|---|---|---|---|---|---|---|
| 1) 244.4 parts by mass of low density polyethylene (d1) and 12.2 parts by mass of low density polyethylene (d2) were contained. | | | | | | | | | | |

### (Example 1: Purging of Resin to be Purged)

The EVOH (A1) was passed through a twin-screw extruder ("2D25W" manufactured by Toyo Seiki Kogyo Co., Ltd.; L/D = 25) for 10 minutes as a resin to be purged, thereby causing the resin to be purged to remain in the extruder. The resin was allowed to stand for 30 minutes by suspending the rotation of a screw. Thereafter, a high-density polyethylene ("HI-ZEX 7000F" manufactured by Prime Polymer Co., Ltd.) was passed through the extruder for 5 minutes, and a die was removed. Subsequently, a cylinder was heated to 290°C, and the heating was performed for 3 hours while causing air to flow into the cylinder with the screw rotation speed set to 10 rpm, thereby deteriorating the resin to be purged through oxidation.

Subsequently, the resin composition (E1) was supplied from a hopper of the extruder for 40 minutes at a purge temperature of 110°C, a screw rotation speed of 100 rpm, and an extrusion output of 3.2 (kg/hour). Thereafter, a low-density polyethylene ("LC-600A" manufactured by Japan Polyethylene Corporation) was passed through the extruder for 3 minutes, and then, a low-density polyethylene ("LC-600A" manufactured by Japan Polyethylene Corporation) was passed through the extruder for 10 minutes while heating a cylinder until the temperature of the cylinder reached 220°C. Thereafter, a high-density polyethylene ("HI-ZEX 7000F" manufactured by Prime Polymer Co., Ltd.) was passed through the extruder for 5 minutes.

### (Amount of Adhesion to Screw)

In each example and comparative example, the die was disassembled after the above-described purging to take out the biaxial screw therefrom, and the adhering resin to be purged on the screw was collected with a copper spatula. The weight of the collected resin to be purged was measured. The results obtained are shown in Table 2.

### (Residual Properties in Hopper)

In each example and comparative example, the presence or absence of the resin composition that had adhered to and remained in the hopper at the time of introducing the resin composition to the hopper was checked visually and evaluated according to the following evaluation criteria. The results obtained are shown in Table 2.
A: The introduced resin composition did not adhere to the hopper.
B: A slight amount of the introduced resin composition adhered to the hopper.
C: A large amount of the introduced resin composition adhered to the hopper.

### (Feedability)

In each example and comparative example, the same purging operation was performed except that a single-screw extruder ("D2020" manufactured by Toyo Seiki Kogyo Co., Ltd.; L/D = 20) was used instead of the twin-screw extruder. During this operation, how the resin composition that had been introduced from the hopper was supplied (fed) to the extruder was checked visually and evaluated according to the following evaluation criteria. The results obtained are shown in Table 2.
A: The resin composition was automatically fed from the hopper.
B: The resin composition could be fed from the hopper by using a push rod intermittently.
C: The resin composition could not be fed from the hopper unless a push rod was used constantly.

### (Examples 1 to 19 and 22: Purging of Resin to be Purged)

A residual resin to be purged in the extruder was purged in the same manner as in Example 1, except that the resin compositions (E1) to (E19) shown in Table 2 were used and that the purging temperatures shown in Table 2 were employed. The results obtained are shown in Table 2. Examples 16 to 18 and 22 are reference examples, not according to the invention.

### (Example 20, reference example, not according to the invention: Purging of Resin to be Purged by Second Purging Method)

Purging was performed in the same manner as in Example 1, except that the residual resin to be purged in the extruder was purged by, instead of using the resin composition (E1), introducing 100 parts by mass of the EVOH (A6) and 264 parts by mass of the low-density polyethylene (d1) from the hopper of the extruder and adding 20 parts by mass of a 10 mass% aqueous sodium carbonate solution (pH = 12.0) thereto from a feed section of the extruder to prepare a purging agent in the extruder. The results obtained are shown in Table 2.

### (Example 21, reference example, not according to the invention: Purging of Resin to be Purged by Second Purging Method)

Purging was performed in the same manner as in Example 1, except that the residual resin to be purged in the extruder was purged by, instead of using the resin composition (E1), introducing a water-containing EVOH resin containing 100 parts by mass of the EVOH (A1) and 25 parts by mass of ion-exchange water and 264 parts by mass of the low-density polyethylene (d1) from the hopper of the extruder and adding 20 parts by mass of a 15 mass% aqueous sodium carbonate solution (pH=12.0) thereto to prepare a purging agent in the extruder. The results obtained are shown in Table 2.

### (Comparative Examples 1 to 7: Purging of Resin to be Purged)

A residual resin to be purged in the extruder was purged in the same manner as in Example 1, except that the resin compositions (C1) to (C3) and (E1) shown in Table 2 were used and that the purging temperatures shown in Table 2 were employed. The results obtained are shown in Table 2.

**[Table 2]**

| | Resin Composition | Purge Temperature (°C) | Amount of Adhesion to Screw (g) | Residual Properties in Hopper | Feedability |
|---|---|---|---|---|---|
| Example 1 | (E1) | 110 | 0.5 | A | A |
| Example 2 | (E2) | 110 | 0.5 | A | A |
| Example 3 | (E3) | 110 | 0.5 | A | A |
| Example 4 | (E4) | 110 | 0.7 | A | A |
| Example 5 | (E5) | 150 | 1.0 | A | A |
| Example 6 | (E6) | 110 | 0.5 | A | A |
| Example 7 | (E7) | 110 | 0.6 | B | B |
| Example 8 | (E8) | 110 | 1.4 | A | A |
| Example 9 | (E9) | 110 | 0.5 | A | A |
| Example 10 | (E10) | 110 | 0 | A | A |
| Example 11 | (E11) | 110 | 0.1 | A | A |
| Example 12 | (E12) | 110 | 0.5 | A | A |
| Example 13 | (E13) | 110 | 0.9 | A | A |
| Example 14 | (E14) | 110 | 0.6 | A | A |
| Example 15 | (E15) | 110 | 0.5 | A | A |
| Example 16 | (E16) | 110 | 1.6 | A | A |
| Example 17 | (E17) | 110 | 0.6 | C | B |
| Example 18 | (E18) | 110 | 0.8 | C | B |
| Example 19 | (E1) | 165 | 1.1 | A | A |
| Example 20 | - | 110 | 0.5 | A | A |
| Example 21 | - | 110 | 0.5 | A | A |
| Example 22 | (E19) | 190 | 0.5 | A | A |
| Comparative Example 1 | (C1) | 110 | 3.2 | A | A |
| Comparative Example 2 | (C1) | 220 | 4.2 | A | C |
| Comparative Example 3 | (C2) | 110 | 0.6 | C | C |
| Comparative Example 4 | (C3) | 110 | 3.6 | A | A |
| Comparative Example 5 | (E1) | 90 | Failure to be Extruded | A | - |
| Comparative Example 6 | (E1) | 180 | 4.2 | A | B |
| Comparative Example 7 | (E1) | 220 | 4.6 | A | C |

As can be seen from Table 2, the resin compositions (E1) to (E19) obtained in Formulation Examples 1 to 18 were all capable of efficiently discharging the resin to be purged present in the extruder from the molding machine. In particular, when the resin compositions (E1) to (E7) and (E9) to (E15) were used, the amount of the adhering resin to be purged on the screw could be reduced to a low value of less than 1 g. This demonstrates that these resin compositions were excellent in the residue properties in the hopper and the feedability.

The present invention can reduce defects in products obtained using a molding machine and also can reduce an enormous amount of time required and a material loss for eliminating these defects. Accordingly, the present invention is useful in the field of resin molding, for example.

## Claims

1. A resin composition comprising:
a hydrophilic resin (A);
water (B); and
a basic compound (C),
wherein the mass ratio (A)/(B) of the hydrophilic resin (A) to the water (B) is 66/34 to 90/10,
wherein the content of the basic compound (C) is 0.25 to 7 parts by mass with respect to 100 parts by mass of the hydrophilic resin (A),
wherein the water (B) and the basic compound (C) are contained in the form of an alkali aqueous solution,
wherein the pH of the resin composition is 10 to 13, and
wherein the hydrophilic resin (A) is at least one selected from the group consisting of ethylene-vinyl alcohol copolymers, polyvinyl alcohols, polyamides, polyacrylates, polyethylene glycols, and polyacrylamides.

2. The resin composition according to claim 1, further comprising another thermoplastic resin (D).

3. The resin composition according to claim 2, wherein the content of the thermoplastic resin (D) is 1 to 10000 parts by mass with respect to 100 parts by mass of the hydrophilic resin (A).

4. The resin composition according to any one of claims 1 to 3, wherein the basic compound (C) is at least one selected from the group consisting of alkali metal carbonates, alkali metal bicarbonates, alkali metal phosphates, alkali metal acetates, hydroxides of alkali metals, ammonia, and primary to tertiary amines.

5. The resin composition according to any one of claims 1 to 4, wherein the hydrophilic resin (A) is an ethylene-vinyl alcohol copolymer.

6. The resin composition according to claim 5, wherein the ethylene-vinyl alcohol copolymer has an ethylene unit content of 15 to 60 mol%.

7. A purging agent comprising the resin composition according to any one of claims 1 to 6.

8. A method for purging a molding machine in which a resin to be purged is present, the method comprising the step of:
supplying a resin composition containing a hydrophilic resin (A), water (B), and a basic compound (C) to the molding machine and discharging the resin composition together with the resin to be purged,
wherein the mass ratio (A)/(B) of the hydrophilic resin (A) to the water (B) is 90/10 to 66/34,
wherein the content of the basic compound (C) is 0.25 to 7 parts by mass with respect to 100 parts by mass of the hydrophilic resin (A),
wherein the water (B) and the basic compound (C) are contained in the form of an alkali aqueous solution,
wherein the pH of the resin composition is 10 to 13, and
wherein the hydrophilic resin (A) is at least one selected from the group consisting of ethylene-vinyl alcohol copolymers, polyvinyl alcohols, polyamides, polyacrylates, polyethylene glycols, and polyacrylamides.

9. The method according to claim 8, wherein the hydrophilic resin (A), the water (B), and the basic compound (C) are supplied to the molding machine in the form of the purging agent according to claim 7.

10. The method according to claim 8 or 9, wherein the temperature of a melting region of the molding machine is 105°C to 230°C.

11. The method according to any one of claims 8 to 10, wherein the hydrophilic resin (A) is an ethylene-vinyl alcohol copolymer.

12. The method according to claim 11**,** wherein the ethylene-vinyl alcohol copolymer has an ethylene unit content of 15 to 60 mol%.

## Patentansprüche

1. Harzzusammensetzung, umfassend:
ein hydrophiles Harz (A);
Wasser (B); und
eine basische Verbindung (C),
wobei das Masseverhältnis (A)/(B) des hydrophilen Harzes (A) zum Wasser (B) 66/34 bis 90/10 beträgt,
wobei der Gehalt der basischen Verbindung (C) 0,25 bis 7 Masseteile, bezogen auf 100 Masseteile des hydrophilen Harzes (A), beträgt,
wobei das Wasser (B) und die basische Verbindung (C) in Form einer alkalischen wässrigen Lösung enthalten sind,
wobei der pH-Wert der Harzzusammensetzung 10 bis 13 beträgt, und
wobei das hydrophile Harz (A) mindestens eines, ausgewählt aus der Gruppe, bestehend aus Ethylen-Vinylalkohol-Copolymeren, Polyvinylalkoholen, Polyamiden, Polyacrylaten, Polyethylenglykolen und Polyacrylamiden, ist.

2. Harzzusammensetzung gemäß Anspruch 1, weiter umfassend ein weiteres thermoplastisches Harz (D).

3. Harzzusammensetzung gemäß Anspruch 2, wobei der Gehalt des thermoplastischen Harzes (D) 1 bis 10000 Masseteile, bezogen auf 100 Masseteile des hydrophilen Harzes (A), beträgt.

4. Harzzusammensetzung gemäß einem der Ansprüche 1 bis 3, wobei die basische Verbindung (C) mindestens eine, ausgewählt aus der Gruppe, bestehend aus Alkalimetallcarbonaten, Alkalimetallbicarbonaten, Alkalimetallphosphaten, Alkalimetallacetaten, Hydroxiden von Alkalimetallen, Ammoniak und primären bis tertiären Aminen, ist.

5. Harzzusammensetzung gemäß einem der Ansprüche 1 bis 4, wobei das hydrophile Harz (A) ein Ethylen-Vinylalkohol-Copolymer ist.

6. Harzzusammensetzung gemäß Anspruch 5, wobei das Ethylen-Vinylalkohol-Copolymer einen Gehalt an Ethyleneinheiten von 15 bis 60 Mol-% aufweist.

7. Spülungsmittel, umfassend die Harzzusammensetzung gemäß einem der Ansprüche 1 bis 6.

8. Verfahren zur Spülung einer Formmaschine, in der sich ein zu spülendes Harz befindet, wobei das Verfahren den Schritt umfasst:
Zuführen einer Harzzusammensetzung, enthaltend ein hydrophiles Harz (A), Wasser (B) und eine basische Verbindung (C), zu der Formmaschine und Ausgeben der Harzzusammensetzung zusammen mit dem zu spülenden Harz,
wobei das Masseverhältnis (A)/(B) des hydrophilen Harzes (A) zum Wasser (B) 90/10 bis 66/34 beträgt,
wobei der Gehalt der basischen Verbindung (C) 0,25 bis 7 Masseteile, bezogen auf 100 Masseteile des hydrophilen Harzes (A), beträgt,
wobei das Wasser (B) und die basische Verbindung (C) in Form einer alkalischen wässrigen Lösung enthalten sind,
wobei der pH-Wert der Harzzusammensetzung 10 bis 13 beträgt, und
wobei das hydrophile Harz (A) mindestens eines, ausgewählt aus der Gruppe, bestehend aus Ethylen-Vinylalkohol-Copolymeren, Polyvinylalkoholen, Polyamiden, Polyacrylaten, Polyethylenglykolen und Polyacrylamiden, ist.

9. Verfahren gemäß Anspruch 8, wobei das hydrophile Harz (A), das Wasser (B) und die basische Verbindung (C) der Formmaschine in Form des Spülungsmittels gemäß Anspruch 7 zugeführt werden.

10. Verfahren gemäß Anspruch 8 oder 9, wobei die Temperatur eines Schmelzbereichs der Formmaschine 105 °C bis 230 °C beträgt.

11. Verfahren gemäß einem der Ansprüche 8 bis 10, wobei das hydrophile Harz (A) ein Ethylen-Vinylalkohol-Copolymer ist.

12. Verfahren gemäß Anspruch 11, wobei das Ethylen-Vinylalkohol-Copolymer einen Gehalt an Ethyleneinheiten von 15 bis 60 Mol-% aufweist.

## Revendications

1. Composition de résine comprenant :
une résine hydrophile (A) ;
de l'eau (B) ; et
un composé basique (C),
dans laquelle le rapport massique (A)/(B) de la résine hydrophile (A) sur l'eau (B) est de 66/34 à 90/10,
dans laquelle la teneur en le composé basique (C) est de 0,25 à 7 parties en masse par rapport à 100 parties en masse de la résine hydrophile (A),
dans laquelle l'eau (B) et le composé basique (C) sont contenus sous la forme d'une solution aqueuse alcaline,
dans laquelle le pH de la composition de résine est de 10 à 13, et
dans laquelle la résine hydrophile (A) est au moins une sélectionnée parmi le groupe constitué de copolymères d'éthylène-alcool vinylique, d'alcools polyvinyliques, de polyamides, de polyacrylates, de polyéthylène glycols et de polyacrylamides.

2. Composition de résine selon la revendication 1, comprenant en outre une autre résine thermoplastique (D).

3. Composition de résine selon la revendication 2, dans laquelle la teneur en la résine thermoplastique (D) est de 1 à 10 000 parties en masse par rapport à 100 parties en masse de la résine hydrophile (A).

4. Composition de résine selon l'une quelconque des revendications 1 à 3, dans laquelle le composé basique (C) est au moins un sélectionné parmi le groupe constitué de carbonates de métal alcalin, de bicarbonates de métal alcalin, de phosphates de métal alcalin, d'acétates de métal alcalin, d'hydroxydes de métaux alcalins, de l'ammoniac et d'amines primaires à tertiaires.

5. Composition de résine selon l'une quelconque des revendications 1 à 4, dans laquelle la résine hydrophile (A) est un copolymère d'éthylène-alcool vinylique.

6. Composition de résine selon la revendication 5, dans laquelle le copolymère d'éthylène-alcool vinylique a une teneur en unités d'éthylène de 15 à 60 % en mol.

7. Agent de purge comprenant la composition de résine selon l'une quelconque des revendications 1 à 6.

8. Procédé de purge d'une machine de moulage dans laquelle une résine devant être purgée est présente, le procédé comprenant l'étape consistant à :
fournir une composition de résine contenant une résine hydrophile (A), de l'eau (B) et un composé basique (C) à la machine de moulage, et évacuer la composition de résine conjointement à la résine devant être purgée,
dans lequel le rapport massique (A)/(B) de la résine hydrophile (A) sur l'eau (B) est de 90/10 à 66/34,
dans lequel la teneur en le composé basique (C) est de 0,25 à 7 parties en masse par rapport à 100 parties en masse de la résine hydrophile (A),
dans lequel l'eau (B) et le composé basique (C) sont contenus sous la forme d'une solution aqueuse alcaline,
dans lequel le pH de la composition de résine est de 10 à 13, et
dans lequel la résine hydrophile (A) est au moins une sélectionnée parmi le groupe constitué de copolymères d'éthylène-alcool vinylique, d'alcools polyvinyliques, de polyamides, de polyacrylates, de polyéthylène glycols et de polyacrylamides.

9. Procédé selon la revendication 8, dans lequel la résine hydrophile (A), l'eau (B) et le composé basique (C) sont fournis à la machine de moulage sous la forme de l'agent de purge selon la revendication 7.

10. Procédé selon la revendication 8 ou 9, dans lequel la température d'une région de fonte de la machine de moulage est de 105 °C à 230 °C.

11. Procédé selon l'une quelconque des revendications 8 à 10, dans lequel la résine hydrophile (A) est un copolymère d'éthylène-alcool vinylique.

12. Procédé selon la revendication 11, dans lequel le copolymère d'éthylène-alcool vinylique a une teneur en unités d'éthylène de 15 à 60 % en mol.
